# EUROPÄISCHE PATENTSCHRIFT

(11) **EP 4 347 346 B1**
(45) Veröffentlichungstag und Bekanntmachung des Hinweises auf die Patenterteilung: **26.03.2025**
(21) Anmeldenummer: 22726261.5
(22) Anmeldetag: 13.05.2022
(51) Int. Cl.: B61G 5/10

(54) **ENERGIEVERSORGUNGSSYSTEM MIT VERBRAUCHERVERBUNDEN**
POWER SUPPLY SYSTEM WITH GROUPS OF ELECTRICAL LOADS
SYSTÈME D'ALIMENTATION ÉLECTRIQUE AVEC GROUPES DE CHARGES ÉLECTRIQUES

(30) Priorität: 26.05.2021 DE 102021113556
(43) Veröffentlichungstag der Anmeldung: 10.04.2024
(73) Patentinhaber: HARTING Electric Stiftung & Co. KG, 32339 Espelkamp (DE)
(72) Erfinder: HELLIGE, Denny, 32339 Espelkamp (DE); GERSTL, Walter, 32339 Espelkamp (DE); FERDERER, Albert, 32339 Espelkamp (DE)
(74) Vertreter: Eisenführ Speiser
(86) Internationale Anmeldenummer: PCT/DE2022/100362
(87) Internationale Veröffentlichungsnummer: WO 2022/247986

(56) Entgegenhaltungen:
- EP-A1- 2 665 147
- EP-A1- 3 470 296
- DE-A1- 102019 112 007
- DE-B3- 102017 222 101

## Beschreibung

Die Erfindung geht aus von einem Energieversorgungssystem nach der Gattung des unabhängigen Anspruchs 1.

Derartige Energieversorgungssysteme werden beispielsweise benötigt, um schienengebundene Personenbeförderungsmittel, also Bahnwaggons für den Personalverkehr, mit elektrischer Energie zu versorgen. Ganz besonders bevorzugt werden derartige Energieversorgungssysteme im Bereich sogenannter "fester Zugverbunde", also einem selten bis nicht verändert werdenden Verbund von Eisenbahnwaggons. Die dabei zu versorgenden Verbraucher können sich innerhalb des Verbunds voneinander unterscheiden. Alternativ kann ein solches Energieversorgungssystem zur Versorgung von Produktionsstraßen eingesetzt werden.

### Stand der Technik

Im Stand der Technik wird beispielsweise zur Energieversorgung von Eisenbahnwaggons in der UIC 552 "Zugsammelschiene" vorgeschlagen, Schienenfahrzeuge unterflur zur Energieversorgung mit einer sogenannten Festverdrahtung zu versehen. Dazu werden beide. Enden eines Waggons mit je zwei Anschlusseinrichtungen für elektrischen Strom ausgerüstet. Die Anschlusseinrichtungen sind untereinander mit fest verlegten, üblicherweise starr ausgeführten Leitern unterhalb des Waggons verbunden. Dabei sind die Anschlusseinrichtungen so konzipiert, dass viele Steckzyklen ermöglicht werden. In der UIC 552 ist dabei von mehreren Tausend Steckzyklen (5.000 Steckzyklen) die Rede. Weiterhin sind die Anschlusseinrichtungen derart ausgelegt, dass beispielsweise eine erste Anschlusseinrichtung mit einer zweiten Anschlusseinrichtung verbunden wird. Dabei ist ein Anschluss der ersten Anschlusseinheit mit einer baugleichen ersten Anschlusseinheit nicht vorgesehen, beziehungsweise nicht möglich. Die verschiedenen Anschlusseinheiten dienen zum einen der Energieübertragung von einer Einheit zur nächsten, also von einer Lok zu einem Waggon, sowie zwischen Waggons, zum anderen dienen Sie der redundanten Energieversorgung eines Verbrauchers, welcher an der jeweiligen Einheit angeordnet ist.

Wenngleich dieses Konzept sich lange Zeit bewährt hat, häufen sich in aktuellen Ausführungen von elektrischen Transportmittelverbunden nachteilige Umstände. Besonders nachteilig an dem Stand der Technik ist die fehlende Wartungsfreundlichkeit, die starre Auslegung des Systems und in der Regel auch ein hohes Gewicht und ein beträchtlicher Platzbedarf. Diese Nachteile resultieren unter Anderem aus den in der UIC 552 vorgesehenen, zumindest drei verschiedenartig ausgeführten Anschlusseinheiten pro Waggon.

Die beschriebenen Nachteile werden besonders in festen Zugverbunden ersichtlich, da die Anschlusseinrichtungen eine im Stand der Technik vorgesehene Anzahl von Steckzyklen niemals erreichen. Unter "festem Zugverbund" ist hierbei ein Verbund von Triebwagen, Waggons, Lok oder ähnlichen Einheiten gemeint, welcher in einer zuvor geplanten Konfiguration bestehen bleibt. Durch den hohen Strombedarf im modernen, personenbefördernden Schienenverkehr ist die bisherige Lösung aus dem Stand der Technik überholt und ineffizient. Grade bei stark beanspruchten Kontaktelementen, wie beispielsweise im Bereich des schienengebundenen Verkehrs kommt es aufgrund immer höherer Anforderungen jedoch vermehrt zu Reparatur und Wartungsbedarf, beispielsweise durch erhöhte Elektroerosion oder Elektrokorrosion aufgrund der hohen Stromstärken von über 500A bis zu ein paar tausend Ampere und Spannungen von über 500V bis zu mehreren Kilovolt.

Das Deutsche Patent- und Markenamt hat in der Prioritätsanmeldung zur vorliegenden Anmeldung den folgenden Stand der Technik recherchiert: DE 10 2017 222 101 B3, EP 2 665 147 A1, EP 3 470 296 A1 und Norm UIC 552 1997-01-00.

Insbesondere EP 3 470 296 A1 stellt einen relevanten Stand der Technik im Gebiet der Energieversorgungssysteme dar.

### Aufgabenstellung

Die Aufgabe der Erfindung besteht darin, ein Energieversorgungssystem mit elektrischen Verbraucherverbunden, insbesondere Transportsystemen bestehend aus mehreren Einheiten, anzubieten, welches bei mindestens gleicher oder verbesserter Energieversorgungkapazität, insbesondere zumindest gleicher Stromtragfähigkeit, ein geringeres Gesamtgewicht, eine verringerte Baugröße und eine erhöhte Wartungsfreundlichkeit und/ oder Reparaturfreundlichkeit ermöglicht.

Die Aufgabe wird durch den Gegenstand der unabhängigen Ansprüche gelöst.

Das erfindungsgemäße Energieversorgungssystem ist für elektrische Verbraucherverbunde vorgesehen, wobei ein Verbraucherverbund aus zumindest zwei Verbraucherverbundsegmenten besteht, insbesondere Transportmittel bestehend aus zumindest zwei Transportmittelsegmenten, welche jeweils einen ersten Endbereich und einen zweiten Endbereich, sowie jeweils zumindest einen elektrischen Verbraucher aufweisen, welche von dem Energieversorgungssystem gespeist werden. Ein Verbraucherverbundsegment mit der Nummer n wird gemäß der Erfindung einerseits mit zumindest einem ersten Anschlussbereich des Verbraucherverbundsegmentes n-1 und/ oder andererseits mit einem zweiten Anschlussbereich mit des Verbraucherverbundsegmentes n+1 elektrisch leitend in Verbindung gebracht. Damit ist gemeint, dass das Energieversorgungssystem als Maschennetz ausgeführt ist, dessen Maschen jeweils einem Verbraucherverbundsegment zugeordnet sind, wobei jede Masche über zumindest zwei Anschlusseinrichtungen verfügt und wobei zumindest eine erste Anschlusseinrichtung entlang dem ersten Endbereich angeordnet sind und zumindest eine zweite Anschlusseinrichtung an dem zweiten Endbereich, Jede Anschlusseinrichtung weist zumindest zwei Anschlüsse zur Aufnahme je eines elektrischen Verbinders auf, wobei die elektrischen Verbinder ihrerseits mit einem elektrischen Leiter verbunden sind. Die Erfindung zeichnet sich dadurch aus, dass die Anschlusseinrichtungen im Wesentlichen baugleiche Anschlüsse aufweisen und die Verbinder mit den Anschlüssen der Anschlusseinrichtungen kompatibel ausgebildet sind. Dabei sind die Anschlusseinrichtungen dazu ausgelegt, besonders hohe elektrische Stromstärken und/ oder hohe elektrische Spannung zu übertragen. Als "hohe elektrische Stromstärke" ist eine Stromstärke von über 100 Ampere gemeint. Insbesondere ist eine Stromstärke von über 500 Ampere gemeint. Ganz besonders ist eine Stromstärke von über 800 Ampere gemeint. Denkbar ist auch eine Stromstärke von größergleich 1.000 Ampere. Unter dem Begriff "hohe elektrische Spannung" ist eine Spannung von über 1 Kilovolt zu verstehen. Insbesondere ist eine Spannung von über 10 Kilovolt gemeint. Ganz besonders ist eine Spannung von über 15 Kilovolt gemeint. Denkbar ist auch eine Stromstärke von größergleich 25 Kilovolt.

In einer Ausführungsform sind die elektrischen Leiter des Maschennetzes beiden Endes mit im Wesentlichen baugleichen Verbindern abgeschlossen ausgeführt. Damit ist gemeint, dass die Leiter bevorzugt gleiche Verbinder an Ihren jeweiligen Enden aufweisen. Durch diese Ausführungsform können verschiedenste Leiter, bevorzugt als Kabel mit entsprechend der Definition hoher Stromstärke, bzw. hoher elektrischer Spannung ausreichendem Querschnitt, vorkonfektioniert werden. Durch vorkonfektionierte Kabel lässt sich, im Fall eines notwendigen Austauschs, der Zeitaufwand auf ein vorteilhaftes Mindestmaß reduzieren.

Eine geschickte Ausführungsform sieht vor, die Anschlusseinrichtungen als elektrische Verteiler mit zumindest drei Anschlüssen auszuführen. Die Ausführung der Anschlusseinrichtungen als Verteiler ist besonders bei schienengebundenen Transportmitteln, wie elektrisch betriebenen Eisenbahnverbunden besonders vorteilhaft, da aus Sicherheitsgründen eine Redundanz geschaffen sein muss, die mit als einfacher Verbindungseinheit ausgeführten Anschlusseinrichtungen nicht sinnvoll hergestellt werden kann. Besonders vorteilhaft sind hier Ausführungen, die die Anschlusseinrichtung als T-Verteiler, Y-Verteiler, H-Verteiler oder X-Verteiler vorsehen. Derartige Anschlusseinrichtungen sind aus Hochleistungssteckverbindersystemen bekannt, wie in der DE 10 2020 108 458 A1 beschrieben.

In einer weiteren Ausführungsform sind die Verbinder als mit den Anschlüssen der Anschlusseinrichtung verbindbare Steckverbinder ausgeführt. Durch die Ausführung als Steckverbinder kann eine besonders vorteilhafte Verbindung der elektrischen Leiter mit der Anschlusseinrichtung erreicht werden. In geschickter Weise sind die Verbinder als Steckverbinder mit Verriegelungselement ausgeführt. Besonders Vorteilhaft sind dabei Ausführungsformen mit sogenannter Push-Pull Verriegelung, Verriegelungsbügel, Bajonettverschluss oder einer Kombination bekannter Verriegelungselemente. Derartige Steckverbinder sind aus Hochleistungssteckverbindersystemen bekannt, wie in der DE 10 2020 108 458 A1 beschrieben.

In einer einfachen Ausführungsform sind die Verbinder als Singlepol Steckverbinder ausgebildet. Damit wird eine Hochleistungsübertragung ermöglicht, sodass die notwendigen Belastungen von mehr als 100 A, gelegentlich mehr als 250 A, häufig mehr als 500 A, insbesondere Belastungen in einem Bereich von 650 A bis 1000A durch das Energieversorgungssystem sicher erreicht werden können. Sinnvollerweise wird der als Singlepol Steckverbinder ausgeführte Verbinder mit zumindest einem Verriegelungselement an der Anschlusseinrichtung fixiert. Einfacherweise können hier Schrauben zur Fixierung eingesetzt werden. Auch zuvor genannte Verriegelungselemente, wie beispielsweise Bajonettverriegelungssysteme, sind denkbar.

In einer sinnvollen Ausführungsform ist zumindest eine Masche des als Maschennetz ausgebildeten Energieversorgungssystems um zumindest eine Abgriffeinheit erweitert. Damit ist gemeint, dass zusätzlich zu den elektrischen Leitern und den zumindest zwei Anschlusseinrichtungen, welche zur Bildung einer Masche eingesetzt werden, eine gesonderte Einheit genutzt wird, um eine Verbindung zu dem Verbraucher des Transportmittelsegments zu ermöglichen.

In geschickter Weise sieht dabei eine Ausführungsform vor, dass die Abgriffeinheit zumindest zwei Anschlüsse aufweist, welche baugleich zu den Anschlüssen der Anschlusseinrichtungen ausgebildet sind und zumindest einen Abgriff aufweisen, wobei der Abgriff zur elektrischen Verbindung des Energieversorgungssystems mit dem Verbraucher vorgesehen ist. Dadurch können auch hier vorkonfektionierte Kabel eingesetzt werden, welche bei Beschädigung einen Austausch in einfacher Weise ermöglichen. Verbessert wird die Ausführungsform durch einen Abgriff, welcher im Wesentlichen identisch oder zumindest kompatibel zu den Anschlüssen der Anschlusseinrichtungen ausgeführt ist.

Eine besonders vorteilhafte Ausführungsform sieht vor, die Abgriffeinheit im Wesentlichen baugleich zu einer Anschlusseinrichtung auszuführen. Auf diese Weise wird die Wartungsfreundlichkeit einfach und kostengünstig erhöht, da jede Anschlusseinrichtung sowie die Abgriffeinheit durch baugleiche Elemente ausgetauscht werden können. Besonders eine Ersatzteillagerung wird verringert und somit günstiger und platzsparender gestaltet.

Eine Ausführungsform offenbart den elektrischen Verbraucherverbund als schienengebundenes Transportmittel, Als schienengebundene Transportmittel sind insbesondere Güterzugverbunde und/ oder Personenzugverbunde zu verstehen. Als Zugverbund ist dabei ein Verbund aus zumindest einem Triebfahrzeug und zumindest einem Waggon gemeint. Alternativ ist auch ein Verbund mehrerer Triebwaggons möglich. Selbstverständlich sind auch Kombinationen der genannten Transportmittel denkbar.

In einer weiteren Ausführungsform ist das Energieversorgungssystem unterflur des Transportmittels angeordnet. Als unterflur bezeichnet man den Bereich an dem Transportmittel, angeordnet zwischen dem Transportweg und dem Transportmittel selbst. Anders gesagt, ist damit beispielsweise die Unterseits eines Waggons gemeint.

Vorteilhafte Ausgestaltungen der Erfindung sind in den Unteransprüchen und der folgenden Beschreibung angegeben.

### Ausführungsbeispiel

Ein Ausführungsbeispiel der Erfindung ist in den Zeichnungen dargestellt und wird im Folgenden näher erläutert. Es zeigen:

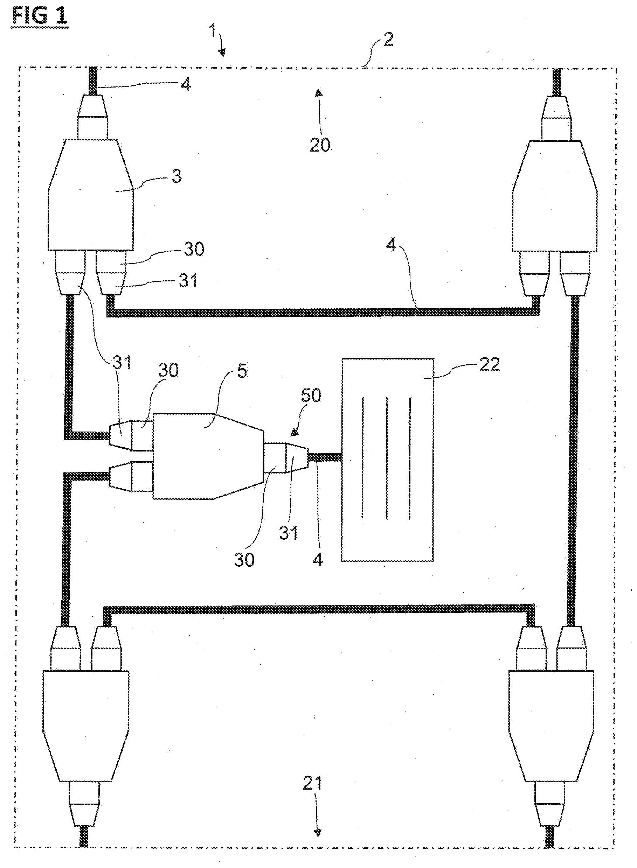

- Fig. 1: eine schematische Darstellung eines erfindungsgemäßen Verbraucherverbundsegmentes eines Energieversorgungssystems;

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Die Figur 1 zeigt eine schematische Darstellung eines Verbraucherverbundsegrnents 2 eines beanspruchten Energieversorgungssystems 1. Zu sehen ist ein redundant versorgtes Verbraucherverbundsegment 2. Ein derart gestaltetes Verbraucherverbundsegment 2 lässt sich insbesondere bei der Energieversorgung scliienengeführter Transportmittel, beispielsweise Personenbeförderungswaggons, wiederfinden. Dabei sind an einem ersten Endbereich 20 sowie an einem zweiten Endbereich 21 jeweils zwei Anschlusseinrichtungen 3 angeordnet. Die Anschlusseinrichtungen 3 sind mit jeweils 3 Anschlüssen 30 ausgeführt. Die Anschlüsse 30 nehmen je einen kompatiblen Verbinder 31 auf. Die Verbinder sind dazu ausgelegt, sowohl eine elektrische, als auch eine mechanische Verbindung zwischen der jeweiligen Anschlusseinrichtung 3, beziehungsweise den daran befindlichen Anschlüssen 30 und einem dazugehörigen Leiter 4 herzustellen, Die beiden Anschlusseinrichtungen 3 im ersten Endbereich 20 sind dabei direkt mit einem Leiter 4 und daran befindlichen Verbindern 31, welche in die entsprechenden Anschlüsse 30 eingreifen, verbunden. Auf die gleiche Weise sind die beiden Anschlusseinrichtungen 3 im zweiten Endbereich 21 miteinander verbunden. Weiterhin sind der erste Endbereich 20 und der zweite Endbereich 21 einmal direkt und einmal indirekt miteinander durch mit Verbindern 31 versehene Leiter 4verbunden. Im Fall der indirekten Verbindung ist eine Abgriffeinheit 5 zwischen der Anschlusseinrichtung 3 des ersten Endbereichs 20 und der Anschlusseinrichtung 3 des zweiten Endbereichs 21 eingesetzt. Die Abgriffeinheit 5 versorgt dabei einen Verbraucher 22 durch einen Abgriff 50. Sinnvollerweise verfügt die Abgriffeinheit 5 über zumindest zwei Anschlüsse 30, die den Anschlüssen 30 der Anschlusseinrichtungen 3 gleichen. Idealerweise wird eine Abgriffeinheit 5 zumindest grundsätzlich baugleich zu den Anschlusseinrichtungen 3 ausgeführt. Hierdurch können Kosten durch weniger sich unterscheidenden Baueinheiten eingespart werden.

Dementsprechend ist der Abgriff 50 identisch zu den Anschlüssen 30 und Verbindern 31 der Anschlusseinheiten 3 dargestellt. Die Verbindung zwischen dem Verbraucher 22 kann wie im dargestellten Beispiel durch Direktanschluss erfolgen. Alternativ kann auch der Verbraucher 22 mit einem Anschuss versehen werden, welcher den Anschlüssen 30 der Abgriffeinheit 5 und/ oder der Anschlusseinrichtungen 3 gleicht.

Durch den im wesentlichen achssymmetrischen Aufbau des ersten Endbereichs 20 und des zweiten Endbereichs 21 lassen sich theoretische beliebig viele Verbraucherverbundsegmente 2 aneinanderreihen und miteinander verbinden. Durch die Ausführung der Anschlusseinrichtungen 3 mit drei zumindest im Wesentlichen baugleichen Anschlüssen 30 können die Verbinder 31 ebenfalls baugleich ausgeführt werden. Hierdurch werden die Montage und die Wartung vereinfacht, zeitgleich wird die Lagerhaltung für Ersatzteile erheblich reduziert. Auch wenn in den Figuren verschiedene Aspekte oder Merkmale der Erfindung jeweils in Kombination gezeigt sind, ist für den Fachmann - soweit nicht anders angegeben - ersichtlich, dass andere als die dargestellten und diskutierten Kombinationen möglich sind, solange sie unter den Schutzumfang der beiliegenden Ansprüche fallen. Insbesondere können einander entsprechende Einheiten oder Merkmalskomplexe aus unterschiedlichen Ausführungsbeispielen miteinander ausgetauscht werden.

### Bezugszeichenliste

- 1: Energieversorgungsystem

- 2: Verbrauchverbundsegment
- 20: erster Endbereich
- 21: zweiter Endbereich
- 22: Verbraucher

- 3: Anschlusseinrichtung
- 30: Anschluss
- 31: Verbinder

- 4: Leiter

- 5: Abgriffeinheit
- 50: Abgriff

## Patentansprüche

1. Energieversorgungssystem (1) mit Verbraucherverbunden, wobei ein
Verbraucherverbund aus zumindest zwei Verbraucherverbundsegmenten (2) gebildet wird, welche jeweils einen ersten Endbereich (20) und einen zweiten Endbereich (21), sowie jeweils zumindest einen elektrischen Verbraucher (22) aufweisen, wobei der elektrische Verbraucher (22) von dem Energieversorgungssystem (1) mit elektrischer Energie gespeist wird, wobei eine Anschlusseinrichtung (3) über zumindest drei Anschlüsse (30) zur lösbaren Aufnahme je eines elektrischen Verbinders (31) verfügen und wobei die Anschlüsse (30) im Wesentlichen baugleich ausgeführt sind, sodass baugleiche Verbinder (31) sowohl zur Verbindung mehrerer Anschlusseinrichtungen (3) innerhalb eines Verbraucherverbundsegmentes (2) als auch zur Verbindung zumindest zweier Verbraucherverbundsegmente (2) einsetzbar sind
**dadurch gekennzeichnet, dass**
jedes Verbraucherverbundsegment (2) über zumindest zwei Anschlusseinrichtungen (3) verfügt, welche entlang dem ersten Endbereich (20) und dem zweiten Endbereich (21) angeordnet sind und wobei die Verbinder (31) mit einem elektrischen Leiter (4) verbunden sind.

2. Energieversorgungssystem (1) nach einem der vorstehenden Ansprüche **dadurch gekennzeichnet, dass** die Anschlusseinrichtungen (3) als elektrische Verteiler mit zumindest drei Anschlüssen (30) ausgeführt sind.

3. Energieversorgungssystem (1) nach einem der vorstehenden Ansprüche **dadurch gekennzeichnet, dass** die Verbinder (31) als Singlepol Steckverbinder ausgebildet ist.

4. Energieversorgungssystem (1) nach einem der vorstehenden Ansprüche **dadurch gekennzeichnet, dass** zumindest ein Verbraucherverbundsegment (2) des Verbraucherverbundes um zumindest eine Abgriffeinheit (5) erweitert ist.

5. Energieversorgungssystem (1) nach einem der vorstehenden Ansprüche **dadurch gekennzeichnet, dass** die Abgriffeinheit (5) zumindest zwei Anschlüsse (30') aufweist, welche baugleich zu den Anschlüssen (30) der Anschlusseinrichtungen (3) ausgebildet sind und zumindest einen Abgriff (50) aufweist, wobei der Abgriff (50) zur elektrischen Verbindung des Energieversorgungssystems (1) mit dem Verbraucher (23) vorgesehen ist.

6. Energieversorgungssystem (1) nach einem der vorstehenden Ansprüche **dadurch gekennzeichnet, dass** die Abgriffeinheit (5) im Wesentlichen baugleich zu einer Anschlusseinrichtung (3) ausgeführt ist.

7. Energieversorgungssystem (1) nach einem der vorstehenden Ansprüche **dadurch gekennzeichnet, dass** der Verbraucherverbund als aus Verbraucherverbundsegmenten (2) bestehendes, Transportmittel ausgeführt ist, wobei das Transportmittel zumindest zwei Transportmittelsegmente aufweist.

8. Energieversorgungssystem (1) nach einem der vorstehenden Ansprüche **dadurch gekennzeichnet, dass** das Transportmittel als schienengebundenes Transportmittel, insbesondere als schienengebundenes Personentransportmittel ausgeführt ist.

9. Energieversorgungssystem (1) nach einem der vorstehenden Ansprüche **dadurch gekennzeichnet, dass** das Energieversorgungssystem (1) unterflur des Transportmittels angeordnet ist.

10. Transportmittel bestehend aus zumindest zwei Transportmittelsegmenten, wobei zumindest ein Transportmittelsegment von einem Energieversorgungssystem (1) gemäß Anspruch 1 gespeist wird.

11. Transportmittel gemäß Anspruch 10,
**dadurch gekennzeichnet, dass**
ein Transportmittelsegment mit zumindest einer Anschlusseinrichtung (3) an einem ersten Endbereich (20) oder zweiten Endbereich (21) mit einem Leiter (4) verbunden ist, wobei der Leiter (4) eines ersten Endes einen Verbinder (31) aufweist, welcher kompatibel zu der Anschlusseinrichtung (3) des Energieversorgungssystems (1) gemäß Anspruch 1 ist und einen zweiten Endes einen Verbinder aufweist, welcher sich von dem Verbinder (31) ersten Endes unterscheidet und kompatibel zu einem andersartigen Energieversorgungssystem ist.

## Claims

1. A power supply system (1) with groups of loads, wherein the group of loads is formed from at least two segments of the group of loads (2) which each have a first end region (20) and a second end region (21), as well as in each case at least one electrical energy-consuming device (22), wherein the electrical energy-consuming device (22) is fed with electrical energy by the power supply system (1), wherein a connection device (3) is provided with at least three terminals (30) for removably holding in each case one electrical connector (31) and wherein the terminals (30) are designed with essentially the same structure such that connectors (31) with the same structure can be used both to connect the connection devices (3) within a segment of the group of loads (20) and to connect at least two segments of the group of loads (2),
**characterized in that**
wherein each segment of the group of loads (2) features at least two connection devices (3) which are arranged along the first end region (20) and the second end region (21), and wherein the connectors (31) are connected to an electrical conductor (4).

2. The power supply system (1) as claimed in one of the preceding claims, **characterized in that**
the connection devices (3) are designed as electrical distributors with at least three terminals (30).

3. The power supply system (1) as claimed in one of the preceding claims, **characterized in that**
the connectors (31) are formed as single-pole plug connectors.

4. The power supply system (1) as claimed in one of the preceding claims, **characterized in that**
at least one segment of the group of loads (2) of the group of loads is expanded by at least one tapping unit (5).

5. The power supply system (1) as claimed in one of the preceding claims, **characterized in that**
the tapping unit (5) has at least two terminals (30') which are formed with the same structure as the terminals (30) of the connection devices (3) and have at least one tap (50), wherein the tap (50) is provided for electrically connecting the power supply system (1) to the energy-consuming device (23).

6. The power supply system (1) as claimed in one of the preceding claims, **characterized in that**
the tapping unit (5) is designed with essentially the same structure as a connection device (3).

7. The power supply system (1) as claimed in one of the preceding claims, **characterized in that**
the group of loads is designed as transportation means consisting of segments of the group of loads (2), wherein the transportation means has at least two transportation means segments.

8. The power supply system (1) as claimed in one of the preceding claims, **characterized in that**
the transportation means is designed as a rail-bound transportation means, in particular as a rail passenger transportation means.

9. The power supply system (1) as claimed in one of the preceding claims, **characterized in that**
the power supply system (1) is arranged below the floor of the transportation means.

10. A transportation means consisting of at least two transportation means segments, wherein at least one transportation means segment is fed from a power supply system (1) as claimed in claim 1.

11. The transportation means as claimed in claim 10, **characterized in that**
a transportation means segment with at least one connection device (3) is connected to a conductor (4) at a first end region (20) or second end region (21), wherein the conductor (4) of a first end has a connector (31) which is compatible with the connection device (3) of the power supply system (1) as claimed in claim 1, and one of a second end has a connector which differs from the connector (31) of the first end and is compatible with a different type of power supply system.

## Revendications

1. Système d'alimentation en énergie (1) avec des groupes de charges, dans lequel un groupe de charges est formé à partir d'au moins deux segments de groupe de charges (2), lesquels présentent respectivement une première zone d'extrémité (20) et une deuxième zone d'extrémité (21) ainsi que respectivement au moins une charge électrique (22), dans lequel la charge électrique (22) est alimentée en énergie électrique par le système d'alimentation en énergie (1), dans lequel un dispositif de raccordement (3) dispose d'au moins trois raccords (30) destinés à recevoir de manière amovible respectivement un connecteur électrique (31) et dans lequel les raccords (30) sont réalisés de manière sensiblement identique en termes de structure si bien que des connecteurs (31) de structure identique destinés à la fois à connecter plusieurs dispositifs de raccordement (3) à l'intérieur d'un segment de groupe de charges (2) et à connecter au moins deux segments de groupe de charges (2) peuvent être employés,
**caractérisé en ce que**
chaque segment de groupe de charges (2) dispose d'au moins deux dispositifs de raccordement (3), lesquels sont disposés le long de la première zone d'extrémité (20) et de la deuxième zone d'extrémité (21) et dans lequel les connecteurs (31) sont connectés à un conducteur électrique (4).

2. Système d'alimentation en énergie (1) selon la revendication précédente, **caractérisé en ce que**
les dispositifs de raccordement (3) sont réalisés en tant que distributeurs électriques avec au moins trois raccords (30)

3. Système d'alimentation en énergie (1) selon l'une quelconque des revendications précédentes, **caractérisé en ce que**
les connecteurs (31) sont réalisés en tant que connecteurs mâles à pôle unique.

4. Système d'alimentation en énergie (1) selon l'une quelconque des revendications précédentes, **caractérisé en ce que**
au moins un segment de groupe de charges (2) du groupe de charge est élargi d'au moins une unité de branchement (5).

5. Système d'alimentation en énergie (1) selon l'une quelconque des revendications précédentes, **caractérisé en ce que**
l'unité de branchement (5) présente au moins deux raccords (30'), lesquels sont réalisés avec une structure identique par rapport aux raccords (30) des dispositifs de raccordement (3) et présente au moins une prise (50), dans lequel la prise (50) est prévue pour connecter électriquement le système d'alimentation en énergie (1) à la charge (23).

6. Système d'alimentation en énergie (1) selon l'une quelconque des revendications précédentes, **caractérisé en ce que**
l'unité de branchement (5) est réalisée sensiblement de manière identique en termes de structure par rapport à un dispositif de raccordement (3).

7. Système d'alimentation en énergie (1) selon l'une quelconque des revendications précédentes, **caractérisé en ce que**
le groupe de charges est réalisé en tant qu'un moyen de transport constitué de segments de groupe de charges (2), dans lequel le moyen de transport présente au moins deux segments de moyen de transport.

8. Système d'alimentation en énergie (1) selon l'une quelconque des revendications précédentes, **caractérisé en ce que**
le moyen de transport est réalisé en tant que moyen de transport sur rails, en particulier en tant que moyen de transport de personnes sur rails.

9. Système d'alimentation en énergie (1) selon l'une quelconque des revendications précédentes, **caractérisé en ce que**
le système d'alimentation en énergie (1) est disposé sous le plancher du moyen de transport.

10. Moyen de transport constitué d'au moins deux segments de moyen de transport, dans lequel au moins un segment de moyen de transport est alimenté par un système d'alimentation en énergie (1) selon la revendication 1.

11. Moyen de transport selon la revendication 10,
**caractérisé en ce que**
un segment de moyen de transport est relié à un conducteur (4) sur une première zone d'extrémité (20) ou une deuxième zone d'extrémité (21) avec au moins un dispositif de raccordement (3), dans lequel le conducteur (4) d'une première extrémité présente un connecteur (31), lequel est compatible par rapport au dispositif de raccordement (3) du système d'alimentation en énergie (1) selon la revendication 1 et le conducteur d'une deuxième extrémité présente un connecteur, lequel se distingue du connecteur (31) de la première extrémité et est compatible par rapport à un système d'alimentation en énergie d'un autre type.
